# EUROPEAN PATENT APPLICATION

(11) **EP 4 837 893 A1**
(43) Date of publication of application: **11.11.2026**
(21) Application number: 26177708.0
(22) Date of filing: 08.05.2026
(51) Int. Cl.: C04B 35/628

(54) **MULTILAYER COATING**

(30) Priority: 08.05.2025 US 202519202735
(71) Applicant: RTX Corporation, Farmington, CT 06032 (US)
(72) Inventor: CALLAWAY, Evan, Goleta, 93117 (US); SUDRE, Olivier, Glastonbury, 06073 (US)
(74) Representative: Dehns

(57) **Abstract**

A multilayer interface coating, comprising a coating structure including at least one of each of the following layers: a debonding layer (210), an oxidation resistant layer (220), and a partial crack deflection layer (230); and, a crack sealing layer (250) as the outermost layer; the partial crack deflection layer (230) being disposed within at least one of the following: (i) least one oxidation resistant layer (220); (ii) at least one debonding layer (210); or (iii) both at least one oxidation resistant layer (220) and at least one debonding layer (210); and, wherein the partial crack deflection layer (230) comprises a thickness of less than approximately 10 nm.

## Description

### FIELD OF THE INVENTION

The subject matter disclosed herein relates to coatings and, in particular, to multilayer coatings.

### BACKGROUND OF THE INVENTION

With respect to protecting ceramic-containing materials, interface coatings can be deposited onto the ceramic-containing materials. Such interface coatings can include repeated layers of a functional coating material, such as boron nitride or carbon, to deflect cracks; and oxidation resistant material, such as silicon carbide or silicon nitride, to prevent oxidation of underlying coating layers and ceramic fibers. However, under fatigue conditions, the oxidation resistant layers can be prone to cracking. The resultant cracks can provide a pathway for time-dependent oxidative degradation of underlying coating layers and ceramic fibers. Such time-dependent oxidative degradation can eventually lead to the ceramic-containing material rupturing.

There exists a need to control the cracking behavior of the oxidation resistant layers and improve the durability of the interface coatings and the ceramic-containing material.

### SUMMARY OF THE INVENTION

According to an aspect of the present invention, there is provided a multilayer interface coating, comprising a coating structure including at least one of each of the following layers: a debonding layer, an oxidation resistant layer, and a partial crack deflection layer; and, a crack sealing layer as the outermost layer; the partial crack deflection layer being disposed within at least one of the following: (i) least one oxidation resistant layer; (ii) at least one debonding layer; or (iii) both at least one oxidation resistant layer and at least one debonding layer; and, wherein the partial crack deflection layer comprises a thickness of less than approximately 10 nm.

Optionally, and in accordance with the above, the at least one partial crack deflection layer comprises a thickness of approximately 5 nm to approximately 10 nm.

Optionally, and in accordance with any of the above, the partial crack deflection layer is disposed within the oxidation resistant layer.

Optionally, and in accordance with any of the above, at least one first partial crack deflection layer is disposed within a first oxidation resistant layer and at least one second partial crack deflection layer is disposed within a second oxidation resistant layer.

Optionally, and in accordance with any of the above, the at least one partial crack deflection layer is disposed within the debonding layer.

Optionally, and in accordance with any of the above, at least one first partial crack deflection layer is disposed within a first debonding layer and at least one second partial crack deflection layer is disposed within a second debonding layer.

Optionally, and in accordance with any of the above, the at least one partial crack deflection layer is disposed within the at least one oxidation resistant layer and the at least one debonding layer.

Optionally, and in accordance with any of the above, the at least one debonding layer comprises boron nitride.

Optionally, and in accordance with any of the above, the at least one oxidation resistant layer comprises at least one of the following: silicon nitride or silicon carbide.

Optionally, and in accordance with any of the above, the at least one partial crack deflection layer comprises at least one of the following: carbon or boron-doped carbon.

Optionally, and in accordance with any of the above, the crack sealing layer comprises silicon boron nitride.

Optionally, and in accordance with any of the above, the at least one oxidation resistant layer comprises a thickness of approximately 50 nm to approximately 250 nm.

Optionally, and in accordance with any of the above, the coating structure comprises a thickness of approximately 100 nm to approximately 400 nm.

According to another aspect of the present invention, there is provided a multilayer interface coating, comprising a coating structure including at least one of each of the following layers: a debonding layer, an oxidation resistant layer, and a partial crack deflection layer; and, a crack sealing layer as the outermost layer; the partial crack deflection layer being disposed within at least one of the following: (i) least one oxidation resistant layer; (ii) at least one debonding layer; or (iii) both at least one oxidation resistant layer and at least one debonding layer; and, wherein the partial crack deflection layer comprises at least one of the following: carbon or boron-doped carbon; and, further comprises a thickness of less than approximately 10 nm.

Optionally, and in accordance with the above, the at least one partial crack deflection layer comprises a thickness of approximately 5 nm to approximately 10 nm.

Optionally, and in accordance with any of the above, the partial crack deflection layer is disposed within the oxidation resistant layer.

Optionally, and in accordance with any of the above, at least one first partial crack deflection layer is disposed within a first oxidation resistant layer and at least one second partial crack deflection layer is disposed within a second oxidation resistant layer.

Optionally, and in accordance with any of the above, the at least one partial crack deflection layer is disposed within the debonding layer.

Optionally, and in accordance with any of the above, at least one first partial crack deflection layer is disposed within a first debonding layer and at least one second partial crack deflection layer is disposed within a second debonding layer.

Optionally, and in accordance with any of the above, the at least one partial crack deflection layer is disposed within the at least one oxidation resistant layer and the at least one debonding layer.

Optionally, and in accordance with any of the above, the at least one debonding layer comprises boron nitride.

Optionally, and in accordance with any of the above, the at least one oxidation resistant layer comprises at least one of the following: silicon nitride or silicon carbide.

Optionally, and in accordance with any of the above, the crack sealing layer comprises silicon boron nitride.

Optionally, and in accordance with any of the above, the at least one oxidation resistant layer comprises a thickness of approximately 50 nm to approximately 250 nm.

Optionally, and in accordance with any of the above, the coating structure comprises a thickness of approximately 100 nm to approximately 400 nm.

According to another aspect of the present invention, there is provided a multilayer interface coating, comprising: a coating structure including at least one of each of the following layers: a debonding layer, an oxidation resistant layer, and a partial crack deflection layer; and, a crack sealing layer as the outermost layer; the partial crack deflection layer being disposed within at least one of the following: (i) least one oxidation resistant layer; (ii) at least one debonding layer; or (iii) both at least one oxidation resistant layer and at least one debonding layer; and, wherein the at least one debonding layer comprises boron nitride, the at least one oxidation resistant layer comprises at least one of the following: silicon nitride or silicon carbide, the at least one partial crack deflection layer comprises at least one of the following: carbon or boron-doped carbon; and the crack sealing layer comprises silicon boron nitride, the at least one partial crack deflection layer further comprises a thickness of less than approximately 10 nm.

Optionally, and in accordance with the above, the at least one partial crack deflection layer comprises a thickness of approximately 5 nm to approximately 10 nm.

Optionally, and in accordance with any of the above, the partial crack deflection layer is disposed within the oxidation resistant layer.

Optionally, and in accordance with any of the above, at least one first partial crack deflection layer is disposed within a first oxidation resistant layer and at least one second partial crack deflection layer is disposed within a second oxidation resistant layer.

Optionally, and in accordance with any of the above, the at least one partial crack deflection layer is disposed within the debonding layer.

Optionally, and in accordance with any of the above, at least one first partial crack deflection layer is disposed within a first debonding layer and at least one second partial crack deflection layer is disposed within a second debonding layer.

Optionally, and in accordance with any of the above, the at least one partial crack deflection layer is disposed within the at least one oxidation resistant layer and the at least one debonding layer.

Optionally, and in accordance with any of the above, the at least one oxidation resistant layer comprises a thickness of approximately 50 nm to approximately 250 nm.

Optionally, and in accordance with any of the above, the coating structure comprises a thickness of approximately 100 nm to approximately 400 nm.

### BRIEF DESCRIPTION OF FIGURES

The features of the invention believed to be novel and the elements characteristic of the invention are set forth with particularity in the appended claims. The figures are for illustration purposes only and are not drawn to scale. The invention itself, however, both as to organization and method of operation, can best be understood by reference to the description of the preferred embodiment(s) which follows, taken in conjunction with the accompanying drawings in which:
FIG. 1 shows a flowchart illustrating a process for fabricating an exemplary multilayer interface coating.
FIG. 2, not drawing to scale, illustrates a substrate having an exemplary multilayer interface coating.
FIG. 3, not drawing to scale, illustrates a substrate having another exemplary multilayer interface coating.
FIG. 4, not drawing to scale, illustrates a substrate having yet another exemplary multilayer interface coating.
FIG. 5A, not drawing to scale, illustrates a first stage of crack propagation of the exemplary multilayer interface coating.
FIG. 5B, not drawing to scale, illustrates a second stage of crack propagation of the exemplary multilayer interface coating.
FIG. 5C, not drawing to scale, illustrates a third stage of crack propagation of the exemplary multilayer interface coating.
FIG. 5D, not drawing to scale, illustrates a fourth stage of crack propagation of the exemplary multilayer interface coating.

### DETAILED DESCRIPTION OF THE INVENTION

The embodiments of the present invention can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

As disclosed herein, the term "ceramic-containing material" may be defined as fiber(s), tow(s), preform(s); individually and combinations thereof; as well as the aforementioned having deposited thereupon or therein a metal, a metalloid; individually, and combinations thereof.

The present invention is directed to a process for fabricating an exemplary multilayer interface coating having a protective layer providing at least partial crack deflection. The protective layer may include thin layers of carbon sandwiched between either silicon carbide layer(s) or silicon nitride layer(s). Once time-dependent oxidative degradation occurs, the protective layer may at least partially deflect cracks that form. In particular, over the deflected length of the protective layer, the Mode II in-plane shear crack may not appreciably open. In turn, the ingress of oxidants to underlying layers may be prevented while oxidation resistance of the exemplary multilayer interface coating may be improved.

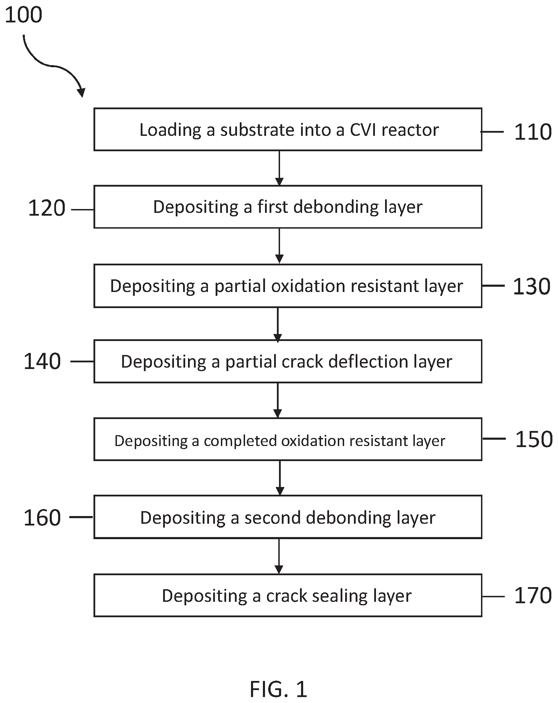

Referring now to FIG. 1, a flowchart 100 illustrating a process for fabricating an exemplary multilayer interface coating is shown. At a step 110 of FIG. 1, a substrate comprising a ceramic-containing material may be loaded into an apparatus. Suitable apparatus may include, but are not limited to, any apparatus capable of depositing a material onto a ceramic-containing material. In particular, the apparatus may be a chemical vapor infiltration (CVI) reactor. Next, at a step 120 of FIG. 1, a first debonding layer may be deposited onto a substrate. The first debonding layer may include, but is not limited to, boron nitride, and combinations thereof. Next, at a step 130 of FIG. 1, a first oxidation resistant layer may be at least partially deposited onto the first debonding layer. The first oxidation resistant layer may include, but is not limited to, silicon nitride, silicon carbide, and combinations thereof. Next, at a step 140 of FIG. 1, a partial crack deflection layer may be deposited onto the at least partially deposited first oxidation resistant layer. The partial crack deflection layer may include, but is not limited to, carbon, boron-doped carbon, and combinations thereof. In at least one embodiment, the amount of boron dopant present in the boron-doped carbon may be approximately 5 at.% to approximately 15 at.% and the remaining balance is carbon. Next, at a step 150 of FIG. 1, the first oxidation resistant layer may be completed by being deposited onto the partial crack deflection layer and opposite the at least partially deposited first oxidation resistant layer. The completed first oxidation resistant layer also may include, but is not limited to, silicon nitride, silicon carbide, and combinations thereof. Next, at a step 160 of FIG. 1, a second debonding layer may be deposited onto the first oxidation resistant layer. The second debonding layer also may include, but is not limited to, boron nitride, and combinations thereof. Next, at a step 170 of FIG. 1, a crack sealing layer may be deposited onto the second debonding layer. The crack sealing layer may include, but is not limited to, silicon boron nitride, and combinations thereof.

Throughout the process set forth above and illustrated in FIG. 1, the operating parameters of the CVI reactor may be adjusted for each material being deposited. For example, when the initial layer of boron nitride is deposited, the operating parameters of the CVI reactor may be attuned to the conditions necessary to deposit boron nitride. However, when the next layer containing silicon nitride or silicon carbide is deposited, the operating parameters of the CVI reactor may be adjusted and attuned to the conditions necessary to deposit silicon nitride or silicon carbide. Such adjustments may be made throughout the process to fabricate the exemplary multilayer interface coating. With such knowledge in mind, in at least one embodiment, the process may operate at a suitable temperature range of approximately 700°C to approximately 1200°C. In at least one other embodiment, the process may operate at a suitable deposition rate of approximately 10 nanometers per hour (nm/hr.) to approximately 500 nm/hr. In at least yet another embodiment, the process may utilize various precursor materials for depositing the aforementioned boron nitride, carbon, silicon nitride, silicon carbide, and silicon boron nitride layers. Suitable precursor materials may include, but are not limited to, BCl₃, NH₃, CH₄, SiCl₄, HSiCl₃, methyl trichlorosilane (MTS); individually, and combinations thereof. During operation of the exemplary method, the aforementioned precursor materials may be delivered into the CVI reactor using a carrier gas. Suitable carrier gases may include, but are not limited to, hydrogen, argon, nitrogen, and combinations thereof.

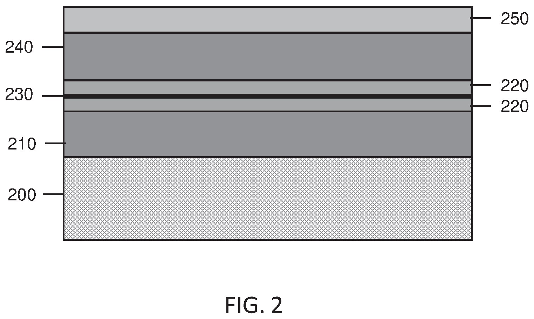

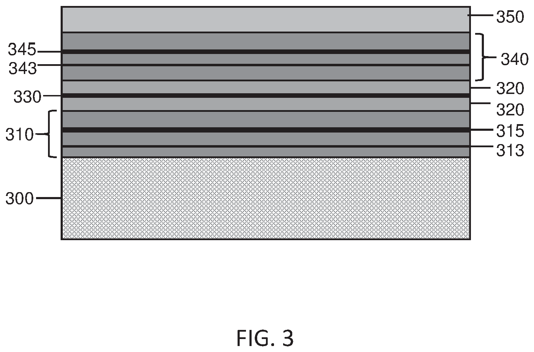

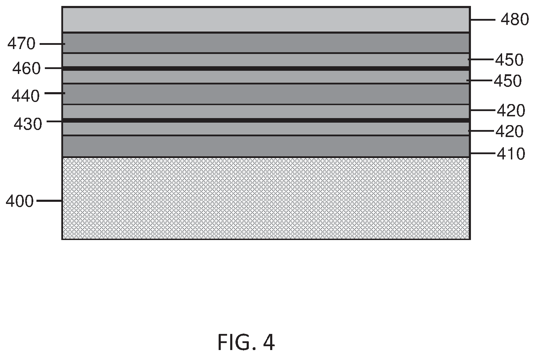

Referring now to FIGS. 2-4, various exemplary multilayer interface coatings are shown. Each exemplary multilayer interface coating may be tailored specifically to achieve at least partial deflection of a crack, e.g., a fatigue crack, due to time-dependent oxidative degradation. And, in the illustrated embodiments, the exemplary multilayer interface coating structure of FIG. 2 may be modified further to reflect the additional multilayer interface coating structures of FIGS. 3 and 4.

Referring specifically to FIG. 2, a substrate 200 comprising a ceramic-containing material may include an exemplary multilayer interface coating deposited thereupon according to the process disclosed above. The exemplary multilayer interface coating of FIG. 2 may include the following multilayer structure: (i) a first debonding layer 210 disposed adjacent the substrate 200; (ii) a partial crack deflection layer 230 disposed within a first oxidation resistant layer 220, the first oxidation resistant layer 220 being disposed adjacent the debonding layer 210; (iii) a second debonding layer 240 disposed adjacent the first oxidation resistant layer 220 and opposite the first debonding layer 210; and (iv) a crack sealing layer 250 disposed adjacent the second debonding layer 240 and opposite the first oxidation resistant layer 220. Various nitride-containing and carbon-containing materials may be utilized as discussed above. In at least one embodiment, the exemplary multilayer interface coating of FIG. 2 may include the following nitride-containing and carbon-containing materials: the first debonding layer 210 may comprise boron nitride; the first oxidation resistant layer 220 may comprise at least one of silicon nitride or silicon carbide; the first partial crack deflection layer 230 may comprise at least one of carbon or boron-doped carbon; the second debonding layer 240 may comprise boron nitride; and, the crack sealing layer 250 may comprise silicon boron nitride.

Referring specifically to FIG. 3, a substrate 300 comprising a ceramic-containing material may include another exemplary multilayer interface coating deposited thereupon according to the process disclosed above. The exemplary multilayer interface coating of FIG. 3 may include the following multilayer structure: (i) a first debonding layer 310 disposed adjacent the substrate 300, and comprising at least one first partial crack deflection layer 313, 315 disposed therein; (ii) a first oxidation resistant layer 320 comprising at least one second partial crack deflection layer 330 disposed therein, the first oxidation resistant layer 320 disposed adjacent the first debonding layer 310; (iii) a second debonding layer 340 comprising at least one third partial crack deflection layer 343, 345 disposed therein, the second debonding layer 340 disposed adjacent the first oxidation resistant layer 320 and opposite the first debonding layer 310; and (iv) a crack sealing layer 350 disposed adjacent the second debonding layer 340 and opposite the first oxidation resistant layer 320. In at least one embodiment, the exemplary multilayer interface coating of FIG. 3 may include the following nitride-containing and carbon-containing materials: the first and second debonding layers 310, 340 may comprise boron nitride; the partial crack deflection layers 313, 315, 330, 343, 345 may comprise at least one of the following: carbon or boron-doped carbon; the first oxidation resistant layer 320 may comprise at least one of the following: silicon nitride or silicon carbide; and, the crack sealing layer 350 may comprise silicon boron nitride.

Referring specifically to FIG. 4, a substrate 400 comprising a ceramic-containing material may include another exemplary multilayer interface coating deposited thereupon according to the process disclosed above. The exemplary multilayer interface coating of FIG. 4 may include the following multilayer structure: (i) a first debonding layer 410 disposed adjacent the substrate 400; (ii) a first oxidation resistant layer 420 comprising a first partial crack deflection layer 430 disposed therein, the first oxidation resistant layer 420 disposed adjacent the first debonding layer 410; (iii) a second debonding layer 440 disposed adjacent the first oxidation resistant layer 420 and opposite the first debonding layer 410; (iv) a second oxidation resistant layer 450 comprising a second partial crack deflection layer 460 disposed therein, the second oxidation resistant layer 450 disposed adjacent the second debonding layer 440 and opposite the first oxidation resistant layer 420; (v) a third debonding layer 470 disposed adjacent the second oxidation resistant layer 450 and opposite the second debonding layer 440; and, (vi) a crack sealing layer 480 disposed adjacent the third debonding layer 470. In at least one embodiment, the exemplary multilayer interface coating of FIG. 4 may include the following nitride-containing and carbon-containing materials: the first, second and third debonding layers 410, 440, 470 may comprise boron nitride; the first and second oxidation resistant layers 420, 450 may comprise at least one of the following: silicon nitride or silicon carbide; the first and second partial crack deflection layers 430, 460 may comprise at least one of the following: carbon or boron-doped carbon; and, the crack sealing layer 480 may comprise silicon boron nitride.

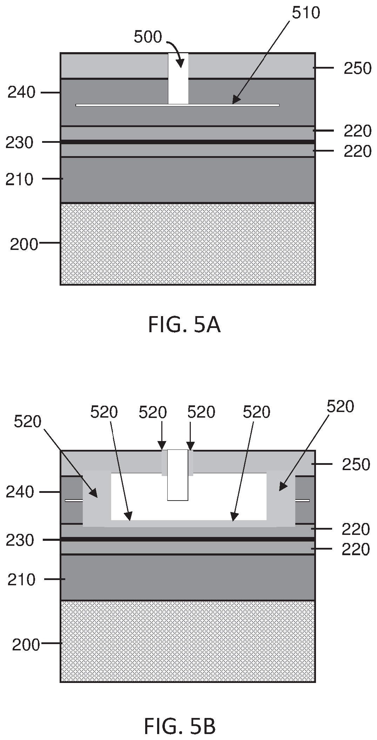

Referring now to FIGS. 5A-5D, during use, each aforementioned exemplary multilayer interface coating of FIGS. 2-4, including any and all variants thereof, may achieve at least partial deflection of a crack, e.g., a fatigue crack 500, due to time-dependent oxidative degradation. Referring now to FIG. 5A, a first stage of crack propagation of the exemplary multilayer interface coating of FIG. 2 deposited on a substrate is illustrated. During the first stage, a fatigue crack 500 forms and time-dependent oxidative degradation of the crack sealing layer 250, e.g., silicon boron nitride, and second debonding layer 240, e.g., boron nitride layer, may begin. In turn, a primary debond crack 510 also forms within the second debonding layer 240. Both the fatigue crack 500 and primary debond crack 510 expose the interior regions of the crack sealing layer 250 and second debonding layer 240 to the atmosphere, operating environment and potential oxidant formation.

Referring now to FIG. 5B, over time, the aforementioned exposure may cause a second stage of crack propagation to begin. During the second stage, the interior regions of the crack sealing layer 250 and second debonding layer 240 may become oxidized and form oxidant(s), e.g., borosilicate glass 520 therein. In turn, the interior regions may expand in size as oxidant(s), e.g., borosilicate glass 250, forms within the crack sealing layer 250 and second debonding layer 240.

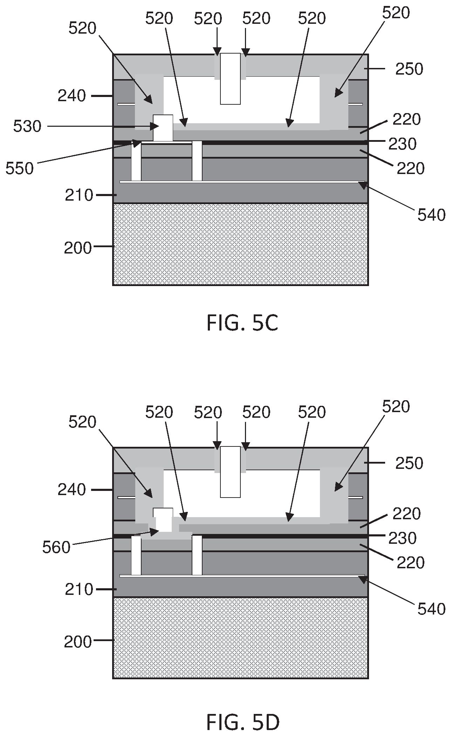

Referring now to FIG. 5C, as the aforementioned exposure continues over time, a third stage of crack propagation may take place. During the third stage, an additional fatigue crack 530 may form through the oxidation resistant layer 220, including the partial crack deflection layer 230 disposed therebetween, until a secondary debond 540 crack forms within the first debonding layer 210 adjacent the substrate 200. Now, additional interior regions of the oxidation resistant layer 220, the partial crack deflection layer 230 and the first debonding layer 210 may become exposed to the atmosphere, operating environment, and potential oxidant(s) formation as mentioned above. However, in contrast to other interface coatings, the exemplary multilayer interface coating may at least partially deflect, by a partial deflection crack 550 forming, and prevent further propagation of the additional fatigue crack and the secondary debond crack 540. This propagation may be referred to as a Mode II in-plane shear crack.

Referring now to FIG. 5D, as the aforementioned additional exposure continues, a fourth stage of crack propagation may take place. Now, oxidants, as mentioned above, have continued forming within the additional exposed interior regions. However, the thickness of the partial crack deflection layer 230 may be approximately 5 nm to approximately 10 nm. The aforementioned thickness does not provide enough space for oxidant diffusion through the secondary debond crack 540 and into the underlying first debonding layer 210. Instead, due to the lack of space available within the interior region of the partial crack deflection layer 230, silicon oxide or silicon dioxide may form a plug, that is, an oxide plug 560, that may prevent further exposure to the atmosphere, operating environment, and potential oxidant(s) formation. Over the deflected length of the partial crack deflection layer 230, that is, the protective layer, the Mode II in-plane shear crack may not appreciably open. As a result, the ingress of oxidant(s) to underlying layers, e.g., oxidation resistant layer 220 and first debonding layer 210, may be prevented while oxidation resistance of the exemplary multilayer interface coating may be improved. And, the overall durability of the underlying substrate 200 may improve as well.

While the present invention has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present invention.

## Claims

1. A multilayer interface coating, comprising:
a coating structure including at least one of each of the following layers:
a debonding layer (210);
an oxidation resistant layer (220); and
a partial crack deflection layer (230); and
a crack sealing layer (250) as the outermost layer;
wherein the partial crack deflection layer (230) is disposed within at least one of the following: (i) at least one oxidation resistant layer (220); (ii) at least one debonding layer (210); or (iii) both at least one oxidation resistant layer (220) and at least one debonding layer (210); and
wherein the partial crack deflection layer (230) comprises a thickness of less than approximately 10 nm.

2. The multilayer interface coating of claim 1, wherein the at least one partial crack deflection layer (230) comprises a thickness of approximately 5 nm to approximately 10 nm.

3. The multilayer interface coating of claim 1 or 2, wherein the partial crack deflection layer (230) is disposed within the oxidation resistant layer (220).

4. The multilayer interface coating of claim 3, wherein at least one first partial crack deflection layer (430) is disposed within a first oxidation resistant layer (420) and at least one second partial crack deflection layer (460) is disposed within a second oxidation resistant layer (450).

5. The multilayer interface coating of claim 1 or 2, wherein the at least one partial crack deflection layer (230) is disposed within the debonding layer (210).

6. The multilayer interface coating of claim 5, wherein at least one first partial crack deflection layer (313, 315) is disposed within a first debonding layer (310) and at least one second partial crack deflection layer (343, 345) is disposed within a second debonding layer (340).

7. The multilayer interface coating of claim 1 or 2, wherein the at least one partial crack deflection layer (313, 315, 330, 343, 345) is disposed within the at least one oxidation resistant layer (320) and the at least one debonding layer (310, 340).

8. The multilayer interface coating of any preceding claim, wherein the at least one debonding layer (210) comprises boron nitride.

9. The multilayer interface coating of any preceding claim, wherein the at least one oxidation resistant layer (220) comprises at least one of the following: silicon nitride or silicon carbide.

10. The multilayer interface coating of any preceding claim, wherein the at least one partial crack deflection layer (230) comprises at least one of the following: carbon or boron-doped carbon.

11. The multilayer interface coating of any preceding claim, wherein the crack sealing layer (250) comprises silicon boron nitride.

12. The multilayer interface coating of any preceding claim, wherein the at least one oxidation resistant layer (220) comprises a thickness of approximately 50 nm to approximately 250 nm.

13. The multilayer interface coating of any preceding claim, wherein the coating structure comprises a thickness of approximately 100 nm to approximately 400 nm.

14. The multilayer interface coating of any preceding claim, wherein:
the at least one debonding layer (210) comprises boron nitride;
the at least one oxidation resistant layer (220) comprises at least one of the following: silicon nitride or silicon carbide;
the at least one partial crack deflection layer (230) comprises at least one of the following: carbon or boron-doped carbon; and
the crack sealing layer (250) comprises silicon boron nitride.
